Europäisches Patentamt

European Patent Office

Office européen des brevets

(19)

(11) **EP 1 196 914 B1**

(12) **FASCICULE DE BREVET EUROPEEN**

(45) Date de publication et mention
de la délivrance du brevet:
**09.04.2003 Bulletin 2003/15**

(51) Int Cl.⁷: **G11B 5/49**, G11B 15/087,
G11B 23/36, G11B 27/30,
G11B 19/12, G11B 11/105

(21) Numéro de dépôt: **99929468.9**

(22) Date de dépôt: **09.07.1999**

(86) Numéro de dépôt international:
**PCT/FR99/01690**

(87) Numéro de publication internationale:
**WO 01/004879 (18.01.2001 Gazette 2001/03)**

(54) **SYSTEME DE SUIVI DE PISTE POUR L'ENREGISTREMENT/LECTURE D'UN SUPPORT D'INFORMATIONS ET SUPPORT D'ENREGISTREMENT**

SPURFOLGESYSTEM ZUR AUFZEICHNUNG/WIEDERGABE EINES INFORMATIONSTRÄGERS UND AUFZEICHNUNGSTRÄGER

TRACKING SYSTEM FOR RECORDING/READING A DATA MEDIUM AND RECORDING MEDIUM

(84) Etats contractants désignés:
**AT BE CH CY DE DK ES FI FR GB GR IE IT LI LU MC NL PT SE**

(43) Date de publication de la demande:
**17.04.2002 Bulletin 2002/16**

(73) Titulaire: **Thales**
**75008 Paris (FR)**

(72) Inventeurs:
• **COLINEAU, Joseph,**
**Thomson-CSF Prop. Intellectuelle**
**94117 Arcueil Cedex (FR)**
• **CLAUDEPIERRE, Christian,**
**Thomson-CSF Prop. Intell.**
**94117 Arcueil Cedex (FR)**

• **AUDOIN, Michel,**
**Thomson-CSF Prop. Intellectuell**
**94117 Arcueil Cedex (FR)**

(74) Mandataire: **Chaverneff, Vladimir et al**
**THALES Intellectual Property,**
**13, avenue du Président S. Allende**
**94117 Arcueil Cédex (FR)**

(56) Documents cités:
| | |
|---|---|
| **EP-A- 0 470 792** | **FR-A- 2 699 724** |
| **US-A- 5 455 719** | **US-A- 5 570 248** |
| **US-A- 5 640 285** | **US-A- 5 701 283** |
| **US-A- 5 703 845** | |

**Description**

L'invention concerne un système de suivi de piste pour l'enregistrement/lecture d'un support d'informations, notamment pour un support d'informations multipistes tel qu'une bande magnétique à multipistes disposées longitudinalement sur la bande.

L'invention s'applique notamment à la lecture d'enregistrements magnétiques ou optiques et, dans ce cadre, à la lecture d'enregistrement haute densité. Elle trouve une application préférentielle dans les systèmes d'enregistrements tels que les périphériques informatiques et tous systèmes professionnels.

Elle peut être étendue aux enregistrements sur bande optique et sur disque magnétique ou optique, dès lors que l'on veut y lire plusieurs pistes en parallèles.

L'enregistrement haute densité sur des pistes parallèles pose un double problème à la relecture de suivi et de séparation des pistes. La faible largeur des pistes (inférieure à 20 μm) fait qu'il est difficile sur un lecteur à bande d'assurer la précision du suivi de piste sur la base du seul guidage mécanique du bord de bande.

La nécessité de garantir l'intéropérabilité des bandes et des lecteurs vient aggraver cette difficulté.

Par ailleurs, l'obtention d'un bon rapport signal à bruit en lecture nécessite de relire toute la largeur de piste, ce qui exclut l'existence d'une garde entre pistes et induit des phénomènes de diaphonie de lecture de piste à piste.

L'augmentation de la densité longitudinale de piste des systèmes d'enregistrement/lecture linéaires rend nécessaire la mise en place de systèmes performants de suivi de piste, permettant de positionner le système de lecture en face des pistes écrites avec une erreur résiduelle faible devant la largeur de piste. La précision de positionnement et de guidage donnée par la mécanique du transport de bande n'est en effet plus suffisante pour garantir naturellement un bon positionnement, Certains systèmes permettent des enregistrements sur des pistes jointives avec un pas inférieur à 10 μm. La lecture d'un tel enregistrement peut se faire optiquement comme cela est décrit dans le brevet français n° FR-A-2.656 723 (voir figure 1). Un dispositif de détection multi-pixels TL6 reçoit un faisceau lumineux porteur des informations lues sur la bande magnétique BD. Pour que les pixels reçoivent les informations de pistes de la bande et que chacun puisse lire une piste déterminée, un système TL5 de déflexion du faisceau de lecture est prévu entre la bande et le dispositif de détection. Par exemple, un activateur à miroir ou à lame permet la déflexion en faisceau optique de lecture à une vitesse suffisante pour assurer en permanence le bon positionnement des pixels du dispositif de détection par rapport aux pistes correspondantes.

Les systèmes de suivi de piste habituellement mis en oeuvre dans les enregistreurs linéaires sont basés sur la lecture permanente ou périodique d'une ou plusieurs pistes de contrôle sur lesquelles des signaux définis (fréquences « pilotes » par exemple) ont été enregistrés. Un signal d'erreur de position est extrait du traitement du signal de cette(ces) piste(s), et agit sur un actuateur, qui effectue un déplacement relatif du faisceau de lecture par rapport aux détecteurs.

Dans le cas de la technologie multipiste à lecture optique, l'accès simultané à un grand nombre de pistes jointives permet d'élaborer directement un signal d'erreur à partir de l'observation de la diaphonie de lecture entre ces pistes. Le signal d'erreur peut alors être exploité pour contrôler la position de l'actuateur.

Le brevet français n° FR-A-2 699 724 décrit un dispositif d'asservissement basé sur ce procédé. Ce système assure un positionnement « relatif », c'est-à-dire qu'il permet le bon centrage des éléments photosensibles du détecteur (pixels) de lecture sur le centre des pistes relues. Il est complété par un second dispositif qui élabore un signal d'erreur si le positionnement relatif ne fait pas correspondre le pixel j à la piste j.

L'invention fournit un système qui présente un temps de réponse plus court que les systèmes connus et qui permet une correction plus rapide du suivi de piste. De plus, ce système est moins contraignant pour le format d'enregistrement.

L'invention concerne donc un système de lecture d'un support magnétique possédant plusieurs pistes d'informations lisibles en parallèle, et comprenant un dispositif de détection comportant au moins autant de détecteurs qu'il y a de pistes, permettant de lire simultanément et à intervalles réguliers un échantillon d'information sur chaque piste, ledit dispositif de détection comportant un registre à décalage parallèle/série recevant en parallèle les échantillons d'informations lus par les détecteurs à chaque instant de lecture et les retransmettant sous forme série, caractérisé en ce qu'il comporte

◆ un circuit de traitement recevant chaque échantillon d'information à traiter de chaque piste ainsi que l'échantillon d'une première piste voisine et l'échantillon d'une deuxième piste voisine, multipliant la valeur dudit échantillon :

- par +1 lorsque l'échantillon de la première piste voisine est négatif et l'échantillon de la deuxième piste voisine est positif ;
- par -1 lorsque l'échantillon de la première piste voisine est positif et l'échantillon de la deuxième piste voisine est négatif ;
- par 0 lorsque les échantillons des pistes voisines sont de même signe ;

♦ un circuit d'intégration recevant chaque valeur d'échantillon ainsi multipliée, intégrant lesdites valeurs obtenues à chaque instant de lecture, puis intégrant les valeurs obtenues aux instants de lecture suivants ;

♦ un circuit de contrôle de suivi de piste relatif recevant le résultat d'intégration du circuit intégrateur et fournissant un signal de commande de suivi de piste du dispositif de détection.

L'invention concerne également un support d'enregistrement comportant plusieurs pistes enregistrables en parallèle, comportant chacune une zone préambule enregistrée ou enregistrable en parallèle, lesdites zones contenant des informations permettant de localiser les pistes les unes par rapport aux autres, caractérisé en ce que les zones de préambules contiennent des informations à composantes continues non nulles, les pistes étant réparties en groupes de pistes contenant des informations à composantes continues positives qui alternent avec des groupes de pistes à composantes continues négatives.

Les différents objets et caractéristiques de l'invention apparaîtront plus clairement dans la description qui va suivre faite à titre d'exemple et dans les figures annexées qui représentent :

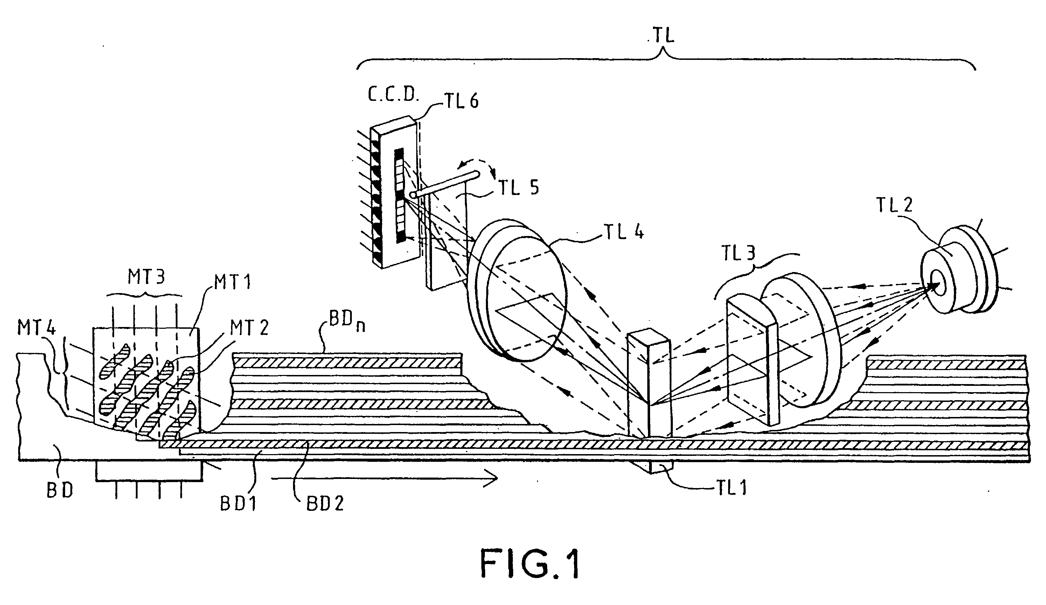

- la figure 1, un système de lecture de bande magnétique connu dans la technique ;
- la figure 2, un exemple général de réalisation du système de l'invention ;
- la figure 3, un exemple de positionnement de détecteurs par rapport aux pistes d'une bande magnétique ;
- la figure 4, un exemple général de réalisation d'un circuit de détection. de position relative des pistes d'un support d'enregistrement par rapport à un dispositif de détection ;
- la figure 5, un exemple de réalisation détaillé du circuit de la figure 4 ;
- la figure 6, un dispositif de détection associé à un support d'enregistrement multipistes ;
- la figure 7, un exemple d'organisation d'un système de suivi de piste absolu selon l'invention ;
- la figure 8, un exemple de circuit permettant de mettre en oeuvre un circuit de contrôle de suivi de piste absolu selon l'invention.

Selon l'invention, la fonction d'élaboration du signal d'erreur est indépendante du système de correction de diaphonie, ce qui permet une optimisation indépendante des deux fonctions. Par ailleurs, le procédé de positionnement absolu ne nécessite plus d'utiliser un code de modulation particulier auquel on vient apporter des violations, mais repose sur des zones indépendantes des zones de données, permettant ainsi d'utiliser tout type de code de modulation adapté au canal. Les signaux particuliers utilisés pour le positionnement absolu peuvent être choisis en fonction de la performance globale désirée (temps de détection de la position absolue). Enfin, positionnements absolu et relatif sont maintenant dissociés, ce qui permet un temps d'établissement beaucoup plus court.

Le fonctionnement général est le suivant :

- le système de lecture possède un nombre d'éléments (pixels) plus important que le nombre de pistes ;
- la boucle de positionnement relatif assure un alignement des pixels sur les pistes les plus proches ;
- un système de détection de position absolue détermine où sont situées les pistes physiques, ou, ce qui est équivalent, indique le numéro du pixel correspondant à la première piste (piste 0) ;
- l'électronique de lecture traite les signaux de tous les pixels ;
- l'information de position des pistes est transmise à l'électronique de traitement des données décodées, qui, elle, ne traite que les données des pistes physiques.

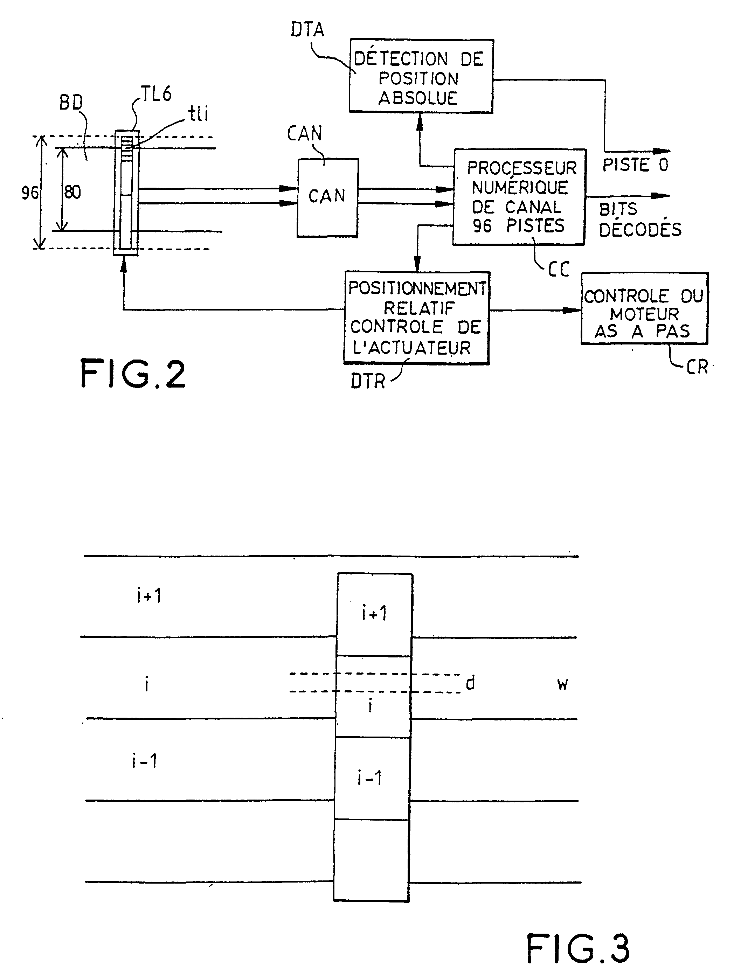

La figure 2 représente un diagramme général du système de l'invention. Ce système comprend un dispositif de détection TL6 comportant une rangée de détecteurs tli. La largeur de cette rangée de détecteurs est plus large que la largeur de la bande BD à lire. Par exemple, comme indiqué sur la figure 2, pour un nombre de pistes de 80, le dispositif de détecteur TL6 comprend 96 détecteurs tli. Le dispositif de détectioh TL6 comporte de manière connue un circuit CCD non représenté permettant de transmettre les signaux détectés sur les pistes vers des circuits de traitement. Ces circuits de traitement comprennent un convertisseur analogique-numérique CAN, un processeur numérique CC capable de traiter les informations des 96 détecteurs.. Un circuit de positionnement relatif DTR du dispositif de détection par rapport aux pistes est associé au processeur CC et commande un système de contrôle TL5 de la position du dispositif de détection par rapport aux pistes. Un circuit de détection de la position absolue DTA des détecteurs par rapport aux pistes est également associé au processeur pour indiquer la relation de position des détecteurs par rapport aux pistes.

Nous allons tout d'abord décrire la conception et un exemple de réalisation du circuit de positionnement relatif DTR.

Dans un système de lecture multipiste idéal, chaque élément de lecture $i$ délivre à l'instant $k$ un signal $x_{i(k)}$ proportionnel au symbole $a_{i(k)}$ écrit sur cette piste.

Dans la pratique, le signal de lecture subit des déformations en raison de la

1- la présence de bruit $b_{(k)}$

2- des interférences entre symboles successifs d'une même piste (interférence intersymbole) par suite de la bande passante limitée du canal

3- des interférences entre symboles de pistes voisines (diaphonie interpiste) par suite des défauts de séparation entre pistes du système de lecture

4- des interférences entre symboles de pistes voisines par suite des défauts de positionnement et de guidage du support d'enregistrement ou des têtes d'écriture/lecture.

La figure 3 représente un ensemble de pistes parallèles de largeur w, et le système de lecture, positionné avec un écart d par rapport à la position optimale.

Le signal de lecture de l'élément de tête i à l'instant k est égal à :

$$x_{i(k)} = (1- \frac{d}{w}) \cdot a_{i(k)} + \frac{d}{w} \cdot a_{i-1(k)} + b_{(k)}$$

Supposons que l'on connaisse le signal $a_{i-1(k)}$ écrit sur la piste i-1. Il est possible de calculer l'intercorrélation de $x_{i(k)}$ et de $a_{i-1(k)}$.

$$C_{i,i-1} = \frac{1}{N} \sum_{k} x_{i(k)} \cdot a_{i-1(k)}$$

$$C_{i,i-1} = \frac{1}{N} \Sigma[(1 - \frac{d}{w}) \cdot a_i + \frac{d}{w} a_{i-1(k)} + b_{(k)}] a_{i-1(k)}$$

$$C_{i,i-1} = \frac{1}{N} \Sigma[(1 - \frac{d}{w}) \cdot a_{i(k)} \cdot a_{i-1(k)} + \frac{1}{N} \Sigma \frac{d}{w} \cdot a_{i-1(k)} \cdot a_{i-1(k)} + \frac{1}{N} \Sigma b_{(k)} \cdot a_{i-1(k)}$$

Le premier terme représente l'intercorrélation des signaux écrits sur les pistes i et i-1. Si les signaux des pistes sont statistiquement indépendantes, ce terme est nul.

De même, le dernier terme représente l'intercorrélation du bruit et du signal. Si le bruit est indépendant du signal, ce terme est nul.

Le second terme représente l'autocorrélation du signal de la piste i-1. C'est l'énergie du signal sur n échantillons. Il est constant en moyenne, et nous le prendrons égal à 1 par convention.

Alors

$$C_{i,i-1} = \frac{1}{N} \Sigma \frac{d}{w} \cdot a_{i-1(k)} \cdot a_{i-1(k)} \approx \frac{d}{w}$$

Dans le cas représenté sur la figure, $C_{i,i+1}$ est nul. Si l'écart du détecteur par rapport aux pistes est dans l'autre sens,

$$C_{i,i-1} = 0$$

$$C_{i,i+1} \approx \frac{d}{w}$$

On peut donc extraire un signal d'erreur de position basé sur les signaux de la piste i :

$$C_{i,i-1} - C_{i,i+1} \approx \frac{d}{w}$$

Afin d'améliorer la qualité de ce signal, il est avantageux de faire ce calcul pour chacune des pistes, et de faire la moyenne des résultats

EP 1 196 914 B1

$$\frac{d}{w} \approx \frac{1}{p}\Sigma[C_{i,i-1}-C_{i,i+1}]$$

Selon l'invention, on effectue le calcul directement, afin de s'affranchir des contraintes de temps de réponse et d'arrondis dimensionnés pour un fonctionnement optimum du correcteur de diaphonie.

A l'instant k :

$$\varepsilon(k) = \frac{1}{p} \sum_i C_{i,i-1}(k) - C_{i,i+1}(k)$$

$$C_{i,i-1} = \frac{1}{N} \sum_k x_{i(k)} \cdot a_{i-1(k)}$$

Les signaux $a_{i(k)}$ enregistrés sur les pistes sont approximés par le signe des échantillons relus sur cette piste. On réalise ainsi un décodage simplifié du signal. L'intérêt de ce décodage simplifié est qu'il n'est pas nécessaire d'attendre la convergence des divers dispositifs de traitement du signal que l'on trouve généralement dans le canal de lecture (égaliseur adaptatif, PLL ...) pour disposer du signal décodé. L'approximation engendre seulement un surcroît de bruit dans l'estimation de l'erreur de position :

$$C_{i,i-1} \# \frac{1}{N} \sum_k x_i(k) . \, sgn(x_{i-1}(k))$$

d'où :

$$\varepsilon(k) = \frac{1}{NP} \sum_i \sum_k [x_i(k) . \, sgn(x_{i-1}(k)) - x_i(k) . \, sgn(x_{i+1}(k))]$$

ou encore :

$$\varepsilon(k) = \frac{1}{NP} \sum_i \sum_k x_i(k) . \, [sgn(x_{i-1}(k)) - sgn(x_{i+1}(k))]$$

Cette dernière forme permet une implantation de l'algorithme particulièrement simple.

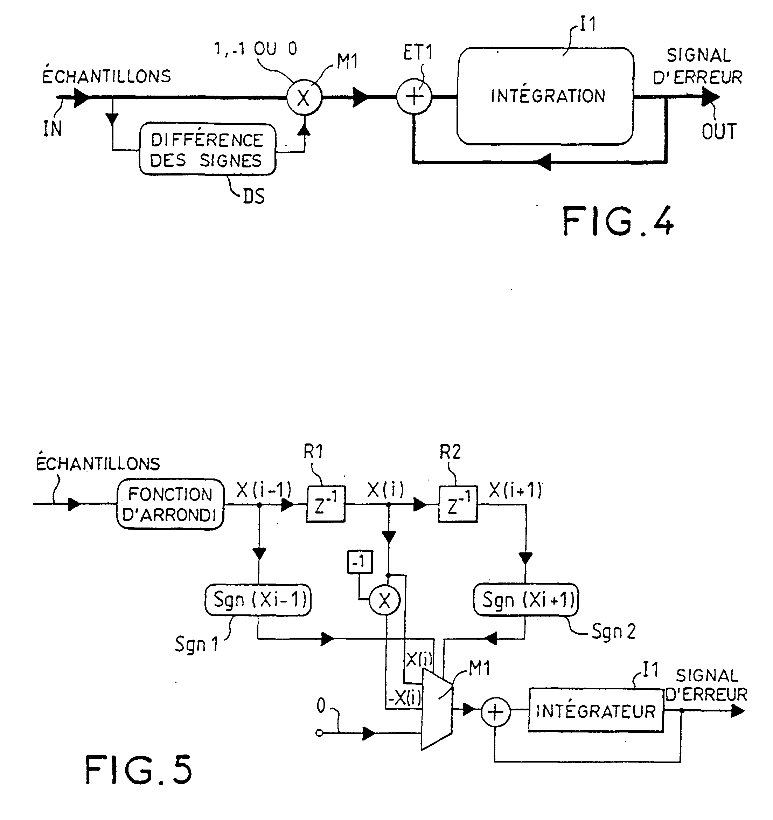

La figure 4 représente un exemple de réalisation simplifié du circuit de positionnement relatif DTR.

Ce circuit reçoit sur son entrée IN les échantillons d'informations transmis sur la sortie série du CCD du dispositif de détection TL6. Chaque échantillon successif est transmis à un multiplicateur M1 où il est multiplié par un coefficient 1, -1 ou 0 fourni par le circuit DS selon les signes des échantillons voisins.

Les échantillons ainsi multipliés sont intégrés dans un circuit d'intégration I1. La sortie OUT de l'intégrateur fournit un signal d'erreur permettant de corriger l'erreur de position relative du dispositif de détection par rapport aux pistes.

Le circuit DS permet de déterminer le coefficient de multiplication K de correction de diaphonie pour chaque échantillon. Pour un échantillon $x_i$, ce coefficient K prendra l'une des valeurs -1, +1 ou 0 en appliquant le tableau suivant :

5

| Valeur du coefficient K | Signe de l'échantillon $x_{i-1}$ | Signe de l'échantillon $x_{i+i}$ |
|---|---|---|
| -1 | >0 | <0 |
| +1 | <0 | >0 |
| 0 | >0 | >0 |
| 0 | <0 | <0 |

On voit donc que si les échantillons sont de même signe le coefficient K est nul. S'ils sont de signes contraires, le coefficient K a pour valeur +1 ou -1 selon les indications de ce tableau.

La figure 5 représente un exemple de réalisation détaillé du circuit DTR.

Ce circuit comporte deux circuits à retard R2 de retards équivalents permettant de transmettre au multiplicateur M1, en même temps qu'un échantillon $X_i$, l'échantillon précédent $X_{i-1}$ et l'échantillon suivant $X_{i+1}$. L'échantillon $X_i$ est transmis au multiplicateur M1 d'une part tel quel et d'autre part multiplié par -1. En ce qui concerne les échantillons $X_{i-1}$ et $X_{i+1}$, seuls les signes de ces échantillons sont transmis par les circuits sgn1 et sgn2. Le circuit M1 reçoit également un signal représentant la valeur 0 d'un échantillon. Le circuit M1 est conçu pour comparer les signes des échantillons $X_{i-1}$ et $X_{i+1}$ et pour commander en application du tableau précédent, la transmission sur la sortie du circuit M1, soit du signal $+X_i$, soit du signal $-X_i$ soit du signal 0.

Les traitements effectués sur les échantillons successifs contenus dans le CCD du dispositif de détection TL6 sont intégrés dans l'intégrateur I1.

Les échantillons d'information des différentes pistes détectés à un instant déterminé et contenus dans le registre CCD du dispositif de détection sont donc traités les uns après les autres comme cela vient d'être décrit et les résultats du traitement sont intégrés dans l'intégrateur I1. Ensuite, les échantillons des différentes pistes détectés aux instants suivants sont traités de la même façon et intégrés à la suite des précédents. L'intégration peut se faire dans le même intégrateur I1.

La profondeur de l'intégrateur dépend de l'amplitude moyenne des échantillons, de leur cadence, et du temps de réponse souhaité. A titre indicatif, pour une cadence de 15 millions d'échantillons par seconde, une profondeur de l'ordre de 20 bits permet d'obtenir une bande passante de la boucle d'asservissement de l'ordre de 30 Hz afin d'obtenir un temps d'accrochage court sans nuire à la précision du système en fonctionnement normal, il est possible de changer la constante de temps entre le régime d'accrochage et le régime de suivi de piste.

Le signal d'erreur codé sur 8 bits est constitué des bits de poids fort de çet intégrateur. Il est ensuite converti en grandeur analogique, filtré puis adapté à la commande du moteur électromagnétique.

Le résultat de l'intégration permet de commander le réglage de la position du dispositif de détection par rapport aux pistes de la bande, ou ce qui revient au même, dans le cas d'une lecture optique des pistes, de régler la déflexion du faisceau de lecture vers le dispositif de détection. Les détecteurs du dispositif de détection étant réglés quasiment sur les centres des pistes, il convient ensuite d'identifier les numéros des pistes lues.

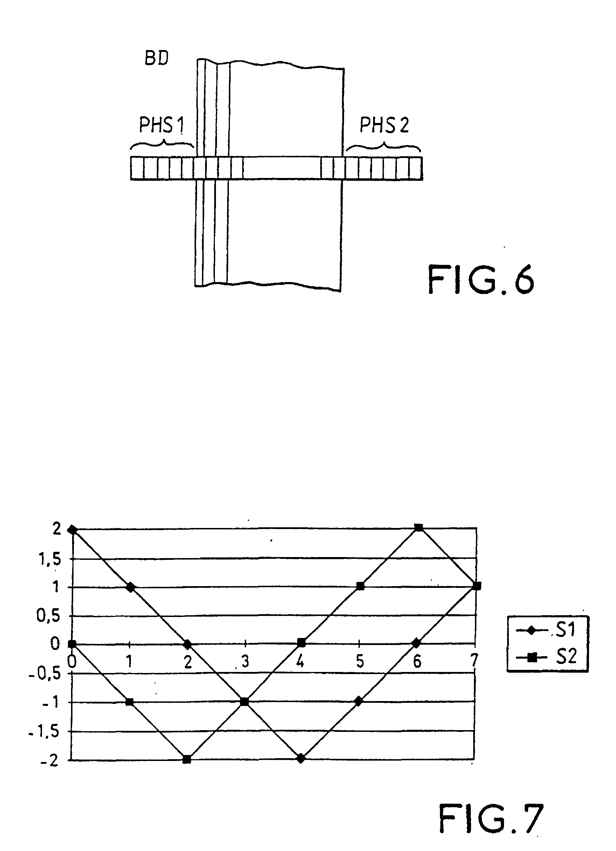

On va maintenant décrire le circuit de détection de position relative DTR qui permet de régler la position des détecteurs par rapport aux centres des pistes lues. Cependant, comme on l'a vu également (figure 2), le dispositif de détection comporte un plus grand nombre de détecteurs qu'il y a de pistes. Tous les détecteurs sont néanmoins pris en compte dans la lecture. Il faut donc détecter les détecteurs PHS1 et PHS2 non utilisés dans la lecture des pistes (figure 6). Le circuit de détection de position absolue DTA permet de détecter ces détecteurs et d'identifier le détecteur correspondant à la première piste, celui correspondant à la deuxième piste, etc...

Selon l'invention, on prévoit, de place en place sur le support d'enregistrement, des zones appelées préambules, contenant des signaux de caractéristiques particulières pour détecter les pistes.

Dans cette zone préambule, quelques pistes au moins, voire toutes les pistes, contiennent une information d'identification permettant d'indiquer le numéro des pistes.

Dans ces conditions, après avoir positionné le dispositif de détection par rapport aux pistes, les détecteurs qui lisent une information d'identification permettent d'identifier les numéros des pistes qu'ils lisent.

Le système identifie donc d'une part les détecteurs utiles pour la lecture de pistes et les numéros des pistes qu'ils lisent.

Une méthode préférentielle selon l'invention est d'imposer, dans la zone préambule, des signaux présentant une composante continue positive ou négative selon les pistes.

De plus, ces signaux présenteront de préférence des caractéristiques requises par d'autres considérations. Il est souhaitable, par exemple, que ces signaux soient peu corrélés de piste à piste afin de ne pas mettre en défaut le fonctionnement du circuit de détection de position relative DTR. Par ailleurs, ils doivent être aptes à être transmis et exploités correctement par le système (caractéristiques spectrales adaptées au canal, probabilité de transitions permettant un bon fonctionnement de la boucle à verrouillage de phase). Une méthode consiste par exemple à utiliser pour cette zone des signaux pseudo-aléatoires codés selon le code de modulation 8/10 ou un jeu de mots spécifiques de ce codé, avec altération du codage. Dans ce système seule la zone de préambule est affectée par ce codage. Une variante peut consister à maintenir ce code dans les zones de données, si le code 8/10 est utilisé dans la zone de données.

Le code 8/10 à composante continue nulle possède un certain nombre de mots de code à composante continue non nulle (DC = ± 2). L'utilisation normale de ce code prévoit qu'un mot à composante continue positive doit être suivi d'un mot à composante continue négative. Si l'on viole cette règle systématiquement ou périodiquement, on engendre une composante continue non nulle sur la piste correspondante. L'intégrale de cette composante continue est généralement appelée DSV (Digital Sum Value). L'idée est de rendre la DSV de chaque piste moyennement croissante ou décroissante suivant un schéma prédéfini pour l'ensemble des pistes et créer ainsi une piste de référence absolue. A la lecture, on distingue alors les pistes à DSV croissante de celles à DSV décroissante. A l'écriture, on rend les DSV des pistes alternativement croissantes sur n pistes puis décroissantes sur n pistes suivantes.

Ceci entraîne une modification qualifiée d' « altération » sur l'algorithme du codage initial. On parlera aussi de « modulation de la DSV » pour qualifier une variation croissante ou décroissante de celle-ci.

La méthode pour rendre une DSV croissante consiste à ne pas compenser un mot codé DC = +2 par un mot codé DC = -2 et d'altérer la DSV en autorisant donc deux mots codés DC = +2 consécutifs. Pour rendre la DSV décroissante, il suffit par contre de compenser deux fois un mot codé DC = +2 par un mot codé DC = -2 et autoriser donc deux mots codés avec DC = -2 consécutifs. Il est aussi possible de violer systématiquement la règle d'encodage, ce qui engendre une composante continue plus forte au prix d'une pénalité plus grande au décodage, si la composante continue n'est pas reconstituée.

Pour évaluer la composante continue sur une piste, on intègre la suite des bits décodés sur cette piste pendant un temps donné, et on examine si le résultat est positif ou négatif.

Plutôt que d'intégrer les bits décodés piste par piste, il est possible de faire la corrélation entre le résultat attendu et celui qui est effectivement observé.

Par exemple, pour une altération de DSV de période 8 pistes, c'est-à-dire 4 pistes consécutives de DSV positives et 4 pistes consécutives de DSV négatives, l'algorithme est le suivant :

$$S1 = \text{somme } [(b_0 + b_1 + b_2 + b_3) - (b_4 + b_5 + b_6 + b_7)]$$

$$S2 = \text{somme } [(b_2 + b_3 + b_4 + b_5) - (b_6 + b_7 + b_0 + b_1)]$$

où $b_i$ représente les échantillons de signal de la piste i modulo 8.

La valeur prise par S1 et S2 selon la position des pistes est représentée en figure 7.

Il est alors possible de déduire des valeurs de S1 et S2, par une table de correspondance, l'écart de position des pistes par rapport à leur position théorique. Un tel tableau est le suivant :

| S1<br>S2 | -2 | -1 | 0 | 1 | 2 |
|---|---|---|---|---|---|
| -2 |  |  | 2 |  |  |
| -1 |  | 3 |  |  |  |
| 0 | 4 |  |  |  | 0 |
| 1 |  | 5 |  | 7 |  |
| 2 |  |  | 6 |  |  |

Inversement, ayant calculé les valeurs de S1 et S2 on en déduit le décalage de pistes.

Pour réduire la probabilité d'erreur, on pourra normaliser les valeurs prises par Si et S2 en remarquant que |S1|+|S2|= constante.

On peut donc, par une modulation de la DSV de période 8 pistes, obtenir une information sur la position des pistes modulo 8 pistes. Si l'on veut une plage plus grande sans incertitude, on pourra augmenter cette période.

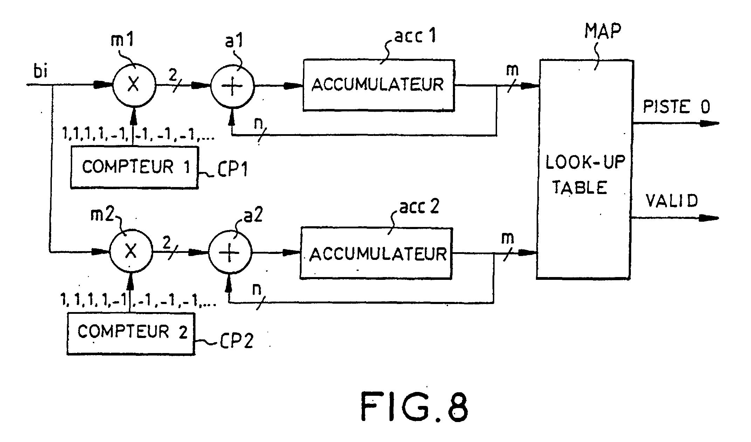

Un circuit réalisant cette fonction est représenté en figure 8.

## Cas de l'utilisation de mots de code quelconques

Dans ce qui suit, on supposé que les mots de code sont choisis de manière aléatoire, mais que l'on applique une violation systématique de la règle d'encodage selon les pistes.

Le code comporte 256 mots, parmi lesquels 103 sont à DSV non nulle (DS = +2 ou -2). Pour un message équiprobable, la probabilité d'occurrence d'un mot à DSV non nulle est donc 103/256. En moyenne la DSV de cette séquence est :

$$+2* 103/256 = 0.805$$

alors que le nombre de symboles canal correspondant est 10.

La composante continue générée par la violation de code est alors 0.08. Cette composante continue pénalise peu le fonctionnement du système, et en particulier le décodage (0.72 dB). Le bruit sur le signal d'erreur peut être évalué comme suit :

Pour une fréquence de mesure de B = 100 Hz, nombre de symboles traités par période d'intégration 1/B :

$$n = D/B$$

où D est le débit binaire brut

La fluctuation du contenu de l'intégrateur est de Vn.

Typiquement, sur une application 64 pistes D = 10 Mb/s et Vn = 316.

Dans le cas d'un écart d'une piste, le signal d'erreur est alors, sur la même période :

$$0.08 * D/B = 8000$$

Soit un S/B de 29 dB.

La profondeur optimale de l'accumulateur reste à évaluer. Elle dépend du temps de détection souhaité.

## Utilisation de mots de code particuliers

Dans un préambule, il est possible de prévoir des mots de code spécifiques. Il est possible, en particulier de n'utiliser que des mots à DSV non nulle, ce qui permet de gagner un facteur 256/103 = 2.5, soit une amélioration de 8 dB sur le S/B, avec, cependant une augmentation sensible de la pénalité sur le décodage (2 dB), ce qui ne présente aucun inconvénient dans cette zone de préambule.

## Utilisation de mots n'appartenant pas à la table du code

Il est tout à fait possible de choisir des mots n'appartenant pas au code 8/10, et leur combinaison à l'intérieur de la piste et entre pistes, afin d'optimiser le fonctionnement global du système.

## Autres modes de détections de la position des pistes

Il est également possible d'utiliser d'autres moyens de repérage des pistes : par exemple, un signal spécifique (fréquence pure ou séquence unique) sur une ou plusieurs pistes. Les critères de choix entre solutions sont la robustesse (généralement mieux assurée si la détection se fait sur un ensemble de pistes) et la simplicité de la réalisation.

## Exploitation du signal de position absolue

Le système de détection délivre un signal (flag) de position d'au moins une piste, par exemple la piste zéro, en synchronisme avec les bits décodés de cette piste (figure 2). Cette information est utilisée par le système de réarrangement des données (électronique de dé-formatage) pour ne retenir que les informations correspondant aux pistes réellement écrites (80/96 dans notre exemple).

**Revendications**

1.  Système de lecture d'un support magnétique possédant plusieurs pistes d'informations lisibles en parallèle, et comprenant un dispositif de détection comportant au moins autant de détecteurs qu'il y a de pistes, permettant de lire simultanément et à intervalles réguliers un échantillon d'information sur chaque piste, ledit dispositif de détection comportant un registre à décalage parallèle/série recevant en parallèle les échantillons d'informations lus par les détecteurs à chaque instant de lecture et les retransmettant sous forme série, **caractérisé en ce qu'**il comporte :

    ♦   un circuit de traitement (M1) recevant chaque échantillon d'information ($x_i$) à traiter de chaque piste ainsi que l'échantillon ($x_{(i-1)}$) d'une première piste voisine et l'échantillon ($x_{(i+1)}$) d'une deuxième piste voisine, et calculant la diaphonie dont est affecté l'échantillon d'information à traiter en raison des pistes voisines :

    ♦   un circuit d'intégration (I1) recevant la valeur de diaphonie ainsi calculée, intégrant lesdites valeurs obtenues à chaque instant de lecture, puis intégrant les valeurs obtenues aux instants de lecture suivants ;

    ♦   un circuit de contrôle de suivi de piste relatif (CR) recevant le résultat d'intégration du circuit intégrateur (I1) et fournissant un signal de commande de suivi de piste du dispositif de détection.

    ledit circuit de traitement comportant des moyens permettant de multiplier la valeur de l'échantillon à traiter :

    -   par +1 lorsque l'échantillon de la première piste voisine est négatif et l'échantillon de la deuxième piste voisine est positif ;
    -   par -1 lorsque l'échantillon de la première piste voisine est positif et l'échantillon de la deuxième piste voisine est négatif ;
    -   par 0 lorsque les échantillons des pistes voisines sont de même signe.

2.  Système selon la revendication 1, **caractérisé en ce que** le support d'information est lu à l'aide d'un faisceau lumineux qui est transmis au dispositif de détection après lecture du support d'information, et **en ce que** le circuit de contrôle de suivi de piste relatif (CR) permet de commander un dispositif de déflexion du faisceau lumineux en fonction de la position du dispositif de détection.

3.  Système selon la revendication 1, **caractérisé en ce que** le dispositif de détection comporte un plus grand nombre de détecteurs qu'il y a de pistes à lire et **en ce qu'**il comprend :

    -   un circuit de détection de position absolue (CTA) permettant d'identifier la piste lue par chaque détecteur du dispositif de détection ;
    -   un circuit de commande central (CC) commandant le fonctionnement dudit circuit de traitement (M1) dudit circuit d'intégration (I1) et dudit circuit de contrôle de suivi de piste relatif (CR), puis du circuit de détection de position absolue.

4.  Système selon la revendication 3, **caractérisé en ce qu'**il comporte des moyens pour identifier, dans les informations lues par chaque détecteur, une ou plusieurs informations d'identité de piste.

5.  Système selon la revendication 4, **caractérisé en ce que** les pistes du support d'information comporté des zones de préambule contenant lesdites informations d'identification.

6.  Système selon la revendication 5, **caractérisé en ce que** les zones de préambule des différentes pistes sont lisibles simultanément.

7.  Système selon la revendication 6, **caractérisé en ce que** les zones de préambule présentent des composantes positives ou négatives selon les pistes et **en ce qu'**un circuit permet de détecter les pistes à composantes continues positives et celles à composantes continues négatives.

8.  Système selon la revendication 7, **caractérisé en ce que** les pistes du support d'enregistrement sont réparties en groupes alternés de composantes positives et négatives.

9.  Système selon la revendication 8, **caractérisé en ce qu'**il comporte des groupes de quatre pistes de composantes positives qui alternent avec des groupes de quatre pistes de composantes négatives et **en ce qu'**il comporte :

- un premier circuit de sommation (S1) additionnant les signes des échantillons détectés par un premier groupe de quatre détecteurs (b0 à b3) et l'inverse des signes détectés par un deuxième groupe de quatre détecteurs (b4 à b7) ;
- un deuxième circuit d'addition (82) additionnant les signes des échantillons détectés par les deux premiers détecteurs du premier groupe de détecteurs et les deux derniers détecteurs du deuxième groupe et l'inverse des signes des échantillons détectés par les autres détecteurs de ces groupes de détecteurs ;
- une table indiquant les numéros des pistes détectées par lesdits détecteurs en fonction des résultats des additions effectuées par les circuits d'addition.

10. Support d'enregistrement comportant plusieurs pistes enregistrables en parallèle, comportant chacune une zone préambule enregistrées ou enregistrables en parallèle, lesdites zones contenant des informations permettant de localiser les pistes les unes par rapport aux autres, **caractérisé en ce que** les zones de préambules contiennent des informations à composantes continues non nulles, les pistes étant réparties en groupes de pistes contenant des informations à composantes continues positives qui alternent avec des groupes de pistes à composantes continues négatives.

**Patentansprüche**

1. System zum Lesen eines magnetischen Trägers, der mehrere parallel lesbare Informationsspuren besitzt, mit einer Erfassungsvorrichtung, die wenigstens so viele Detektoren aufweist, wie Spuren vorhanden sind, die ermöglichen, gleichzeitig und in regelmäßigen Intervallen einen Informationsabtastwert auf jeder Spur zu lesen, wobei die Erfassungsvorrichtung ein Parallel/Seriell-Schieberegister enthält, das die von den Detektoren zu jedem Lesezeitpunkt gelesenen Informationsabtastwerte parallel empfängt und sie in serieller Form zurücksendet, **dadurch gekennzeichnet, daß** es umfaßt:

   * eine Verarbeitungsschaltung (MI), die jeden zu verarbeitenden Informationsabtastwert ($x_i$) jeder Spur sowie den Abtastwert ($x_{i-1}$) einer ersten benachbarten Spur und den Abtastwert ($x_{i+1}$) einer zweiten benachbarten Spur empfängt und das Nebensprechen berechnet, durch das der zu verarbeitende Abtastwert aufgrund der benachbarten Spuren beeinflußt wird;

   * eine Integrationsschaltung (I1), die den auf diese Weise berechneten Nebensprechwert empfängt, die zu jedem Lesezeitpunkt erhaltenen Werte integriert und dann die zu den folgenden Lesezeitpunkten erhaltenen Werte integriert;

   * eine Relativspurverfolgungs-Steuerschaltung (CR), die das Integrationsergebnis der Integrationsschaltung (I1) empfängt und ein Spurverfolgungs-Steuersignal der Erfassungsvorrichtung liefert,

   wobei die Verarbeitungsschaltung Mittel enthält, die ermöglichen, den zu verarbeitenden Abtastwert zu multiplizieren:

   - mit +1, wenn der Abtastwert der ersten benachbarten Spur negativ ist und der Abtastwert der zweiten benachbarten Spur positiv ist;

   - mit -1, wenn der Abtastwert der ersten benachbarten Spur positiv ist und der Abtastwert der zweiten benachbarten Spur negativ ist;

   - mit 0, wenn die Abtastwerte benachbarter Spuren dasselbe Vorzeichen besitzen.

2. System nach Anspruch 1, **dadurch gekennzeichnet, daß** der Informationsträger mit Hilfe eines Lichtstrahlenbündels gelesen wird, das nach dem Lesen des Informationsträgers an die Erfassungsvorrichtung übertragen wird, und daß die Relativspurverfolgungs-Steuerschaltung (CR) ermöglicht, eine Vorrichtung für die Ablenkung des Lichtstrahlenbündels in Abhängigkeit von der Position der Erfassungsvorrichtung zu steuern.

3. System nach Anspruch 1, **dadurch gekennzeichnet, daß** die Erfassungsvorrichtung eine größere Anzahl von Detektoren besitzt, als zu lesende Spuren vorhanden sind, und daß es umfaßt:

   - eine Schaltung (CTA) für die Erfassung der absoluten Position, die ermöglicht, die von jedem Detektor der Erfassungsvorrichtung gelesene Spur zu identifizieren;

- eine zentrale Steuerschaltung (CC), die die Funktionsweise der Verarbeitungsschaltung (M1), der Integrationsschaltung (I1) und der Relativspurverfolgungs-Steuerschaltung (CR) und dann der Schaltung für die Erfassung der absoluten Position steuert.

4. System nach Anspruch 3, **dadurch gekennzeichnet, daß** es Mittel umfaßt, die in den von jedem Detektor gelesenen Informationen eine oder mehrere Spuridentifizierungsinformationen identifizieren.

5. System nach Anspruch 4, **dadurch gekennzeichnet, daß** die Spuren des Informationsträgers Präambelzonen aufweisen, die die Identifizierungsinformationen enthalten.

6. System nach Anspruch 5, **dadurch gekennzeichnet, daß** die Präambelzonen unterschiedlicher Spuren gleichzeitig lesbar sind.

7. System nach Anspruch 6, **dadurch gekennzeichnet, daß** die Präambelzonen je nach Spur positive oder negative Komponenten aufweisen und daß eine Schaltung ermöglicht, die Spuren mit ununterbrochenen positiven Komponenten und die Spuren mit ununterbrochenen negativen Komponenten zu erfassen.

8. System nach Anspruch 7, **dadurch gekennzeichnet, daß** die Spuren des Aufzeichnungsträgers in abwechselnden Gruppen aus positiven bzw. negativen Komponenten verteilt sind.

9. System nach Anspruch 8, **dadurch gekennzeichnet daß** es Gruppen aus vier Spuren mit positiven Komponenten, die sich mit Gruppen aus vier Spuren mit negativen Komponenten abwechseln, umfaßt und daß es umfaßt:

- eine erste Summationsschaltung (S1), die die Vorzeichen von Abtastwerten, die von einer ersten Gruppe aus vier Detektoren (b0 bis b3) erfaßt werden, und die umgekehrten Vorzeichen von Abtastwerten, die von einer zweiten Gruppe von vier Detektoren (b4 bis b7) erfaßt werden, addiert;

- eine zweite Additionsschaltung (S2), die die Vorzeichen von Abtastwerten, die von den beiden ersten Detektoren der ersten Gruppe von Detektoren und von den zwei letzten Detektoren der zweiten Gruppe erfaßt werden, und die umgekehrten Vorzeichen von Abtastwerten, die von den jeweils anderen Detektoren dieser Gruppen von Detektoren erfaßt werden, addiert;

- eine Tabelle, die die Nummern der von den Detektoren erfaßten Spuren in Abhängigkeit von den Ergebnissen der von den Additionsschaltungen ausgeführten Additionen angibt.

10. Aufzeichnungsträger, der mehrere Spuren umfaßt, in die parallel aufgezeichnet werden kann und wovon jede eine Präambelzone enthält, in die parallel aufgezeichnet worden ist oder aufgezeichnet werden kann, wobei die Zonen Informationen enthalten, die die gegenseitige Lokalisierung der Spuren ermöglichen, **dadurch gekennzeichnet, daß** die Präambelzonen Informationen mit von null verschiedenen ununterbrochenen Komponenten enthalten, wobei die Spuren unterteilt sind in Gruppen von Spuren, die Informationen mit ununterbrochenen positiven Komponenten enthalten und mit Gruppen von Spuren abwechseln, die ununterbrochene negative Komponenten enthalten.

**Claims**

1. System for reading a magnetic medium having several tracks of data which can be read in parallel, and comprising a detection device having at least as many detectors as there are tracks, making it possible to read simultaneously and at regular intervals a sample of data on each track, said detection device having a parallel/ series shift register receiving in parallel the samples of data read by the detectors at each read time and retransmitting them in series form, **characterized in that** it comprises:

◆ a processing circuit (M1) receiving each sample of data $(x_i)$ to be processed from each track, together with the sample $(x_{(i-1)})$ of a first adjacent track and the sample $(x_{(i+1)})$ of a second adjacent track, and calculating the cross-talk affecting the sample of data to be processed due to the adjacent tracks;
◆ an integration circuit (I1) receiving the cross-talk value thus calculated, integrating said values obtained at each read time, then integrating the values obtained at following read times;

- ◆ a relative track-following control circuit (CR) receiving the result of integration of the integrator circuit (I1) and supplying a track-following control signal for the detection device.

said processing circuit comprising means making it possible to multiply the value of the sample to be processed:

- by +1 when the sample of the first adjacent track is negative and the sample of the second adjacent track is positive;
- by -1 when the sample of the first adjacent track is positive and the sample of the second adjacent track is negative;
- by 0 when the samples of the adjacent tracks are of the same sign.

2. System according to Claim 1, **characterized in that** the data medium is read using a light beam which is transmitted to the detection device after reading the data medium, and **in that** the relative track-following control circuit (CR) makes it possible to control a device for deflecting the light beam depending on the position of the detection device.

3. System according to Claim 1, **characterized in that** the detection device comprises a greater number of detectors than there are tracks to read and **in that** it comprises:

- an absolute position detection circuit (CTA) making it possible to identify the track read by each detector of the detection device;
- a central control circuit (CC) controlling the operation of said processing circuit (M1) of said integration circuit (I1) and of said relative track-following control circuit (CR), then of the absolute position detection circuit.

4. System according to Claim 3, **characterized in that** it comprises means for identifying, in the data read by each detector, one or more track identity data items.

5. System according to Claim 4, **characterized in that** the tracks of the data medium comprise preamble zones containing said identification data.

6. System according to Claim 5, **characterized in that** the preamble zones of the various tracks can be read simultaneously.

7. System according to Claim 6, **characterized in that** the preamble zones have components which are positive or negative depending on the tracks and **in that** a circuit makes it possible to detect the tracks with positive continuous components and those with negative continuous components.

8. System according to Claim 7, **characterized in that** the tracks of the recording medium are distributed in alternating groups of positive and negative components.

9. System according to Claim 8, **characterized in that** it comprises groups of four tracks of positive components which alternate with groups of four tracks of negative components and **in that** it comprises:

- a first summation circuit (S1) adding the signs of the samples detected by a first group of four detectors (b0 to b3) and the inverse of the signs detected by a second group of four detectors (b4 to b7);
- a second addition circuit (S2) adding the signs of the samples detected by the first two detectors of the first group of detectors and the last two detectors of the second group and the inverse of the signs of the samples detected by the other detectors of these groups of detectors;
- a table indicating the numbers of the tracks detected by said detectors according to the results of the additions carried out by the addition circuits.

10. Recording medium comprising several tracks recordable in parallel, each one comprising a preamble zone recorded or recordable in parallel, said zones containing data making it possible to locate the tracks one with respect to the others, **characterized in that** the preamble zones contain data with nonzero continuous components, the tracks being distributed in groups of tracks containing data with positive continuous components which alternate with groups of tracks with negative continuous components.

FIG.1

EP 1 196 914 B1

DTA

DÉTECTION DE
POSITION
ABSOLUE

BD    TL6    tli

96    80

CAN

CAN

PROCESSEUR
NUMÉRIQUE
DE CANAL
96 PISTES

PISTE 0

BITS
DÉCODÉS

CC

POSITIONNEMENT
RELATIF
CONTROLE DE
L'ACTUATEUR

CONTROLE DU
MOTEUR
AS A PAS

**FIG.2**

DTR

CR

i+1

i+1

i

d    w

i

i-1

i-1

**FIG.3**

FIG.4

FIG.5

FIG.6

FIG.7

FIG.8